# EUROPÄISCHE PATENTSCHRIFT

(11) **EP 3 995 066 B1**
(45) Veröffentlichungstag und Bekanntmachung des Hinweises auf die Patenterteilung: **05.03.2025**
(21) Anmeldenummer: 21203342.7
(22) Anmeldetag: 19.10.2021
(51) Int. Cl.: A47L 9/28, G05D 1/00

(54) **SICH SELBSTTÄTIG FORTBEWEGENDES BODENBEARBEITUNGSGERÄT**
AUTOMATIC SOIL PREPARATION EQUIPMENT
APPAREIL AUTONOME DE TRAITEMENT DU SOL

(30) Priorität: 09.11.2020 DE 102020129411
(43) Veröffentlichungstag der Anmeldung: 11.05.2022
(73) Patentinhaber: Vorwerk & Co. Interholding GmbH, 42275 Wuppertal (DE)
(72) Erfinder: Windorfer, Harald, 40822 Mettmann (DE)
(74) Vertreter: Müller, Enno

(56) Entgegenhaltungen:
- DE-A1- 102016 114 594
- DE-A1- 102016 114 628
- DE-A1- 102017 109 219
- US-A1- 2012 041 593

## Beschreibung

### Gebiet der Technik

Die Erfindung betrifft ein sich selbsttätig fortbewegendes Bodenbearbeitungsgerät mit einer Antriebseinrichtung zur Fortbewegung des Bodenbearbeitungsgerätes innerhalb einer Umgebung, einer Kommunikationsschnittstelle zur Ausgabe von Informationen an einen Nutzer des Bodenbearbeitungsgerätes, einer Hindernisdetektionseinrichtung zur Detektion von Hindernissen innerhalb der Umgebung und einer Recheneinrichtung, welche eingerichtet ist, basierend auf den von der Hindernisdetektionseinrichtung detektierten Hindernissen eine Umgebungskarte zu erstellen, das Bodenbearbeitungsgerät anhand der Umgebungskarte zu lokalisieren und Steuerbefehle an die Antriebseinrichtung und die Kommunikationsschnittstelle zu übermitteln wobei die Recheneinrichtung des Weiteren eingerichtet ist, zumindest ein nicht selbsttätig von dem Bodenbearbeitungsgerät überwindbares Hindernis innerhalb der Umgebungskarte als ein Übergangshindernis zu definieren, das Übergangshindernis bei einer Fortbewegung durch die Umgebung anhand eines Vergleichs von aktuell detektierten Hindernissen mit dem in der Umgebungskarte gespeicherten Übergangshindernis zu identifizieren und bei Erreichen des Übergangshindernisses ein manuelles Transporterfordernis mittels der Kommunikationsschnittstelle an den Nutzer zu melden.

### Stand der Technik

Sich selbsttätig fortbewegende Bodenbearbeitungsgeräte, die sich anhand einer zumeist selbst erstellten Umgebungskarte in der Umgebung lokalisieren und navigieren, sind im Stand der Technik hinreichend bekannt. Bei den Bodenbearbeitungsgeräten kann es sich beispielsweise um haushaltsübliche oder auch industriell bzw. gewerblich genutzte Reinigungsgeräte, Poliergeräte, Schleifgeräte und andere handeln. Reinigungsgeräte können dabei beispielsweise Staubsauger, Wischgeräte oder kombinierte Saug-Wisch-Geräte sein. Die sich selbsttätig fortbewegenden Bodenbearbeitungsgeräte verfügen üblicherweise über eine Hindernisdetektionseinrichtung, die beispielsweise Abstände zu Hindernissen in der Umgebung messen kann. Anhand der detektierten Abstände kann die Umgebungskarte erstellt werden, die im Wesentlichen einen Grundriss der Umgebung mit darin befindlichen Raumbegrenzungen und Hindernissen enthält. Bei den Hindernissen kann es sich zum einen um die Raumbegrenzungen selbst, und zum anderen um Möbelstücke oder auch Stufen, Podeste, Treppenabsätze und ähnliches handeln, deren Standort für das Bodenbearbeitungsgerät nicht befahrbar ist.

Es ist des Weiteren bekannt, eine oder mehrere Bodenbearbeitungstätigkeiten des Bodenbearbeitungsgerätes zeitlich im Voraus zu planen, wobei ein Einsatzplan erstellt wird, welcher Informationen darüber enthält, zu welchem Zeitpunkt und/ oder an welchen Orten der Umgebung das Bodenbearbeitungsgerät eine Bodenbearbeitungstätigkeit ausführen soll. Sobald ein definierter Zeitpunkt erreicht ist, setzt sich das Bodenbearbeitungsgerät in Bewegung, um dann die vorgeplante Bodenbearbeitungstätigkeit auszuführen.

Obwohl sich derartige Bodenbearbeitungsgeräte im Stand der Technik bewährt haben, sind die Bodenbearbeitungsgeräte derzeit noch nicht in der Lage, Hindernisse wie beispielsweise Treppen zu überwinden, um in ein anderes Stockwerk eines Gebäudes zu wechseln. Erstellte Einsatzpläne beziehen sich daher lediglich auf Bodenbearbeitungstätigkeiten in demselben Stockwerk. Der Nutzer hat selbst darauf zu achten, dass er mehrere Stockwerke desselben Gebäudes ausreichend bearbeiten lässt, insbesondere im Hinblick auf ein über die gesamte Fläche des Gebäudes gleichmäßiges Bodenbearbeitungsergebnis.

Die DE 10 2017 109 219 A1 offenbart darüber hinaus einen Reinigungsroboter, welcher einen Nutzer zum Transport in ein anderes Stockwerk auffordert. Dazu wird dem Nutzer eine Erinnerung geschickt und der Reinigungsroboter bewegt sich zu einen Ort in der Nähe einer Treppe, um Weg für den Nutzer zu verkürzen.

### Zusammenfassung der Erfindung

Ausgehend von dem vorgenannten Stand der Technik ist es Aufgabe der Erfindung, ein Bodenbearbeitungsgerät so weiter zu bilden, dass die Bearbeitung mehrerer Stockwerke eines Gebäudes durch nur ein Bodenbearbeitungsgerät sichergestellt werden kann, insbesondere so, dass das Bodenbearbeitungsergebnis auf unterschiedlichen Etagen des Gebäudes gleichermaßen optimal ist.

Zur Lösung dieser Aufgabe wird vorgeschlagen, dass die Umgebungskarte mehrere Umgebungsteilbereiche aufweist, die verschiedenen Stockwerken oder Höhenebenen eines Gebäudes zugehörig sind, wobei die Umgebungsteilbereiche durch definierte Übergangspunkte logisch miteinander verbunden sind, wobei die Verknüpfung derart ist, dass die Recheneinrichtung den Übergangspunkt eines ersten Umgebungsteilbereiches als benachbarten Ort des korrespondierenden Übergangspunktes eines zweiten Umgebungsteilbereiches identifiziert und miteinander in Beziehung bringt, um das Bodenbearbeitungsgerät in einer aus beiden Umgebungsteilbereichen gebildeten Umgebungskarte zu orientieren, und wobei das ausgegebene Transporterfordernis eine Aufforderung an den Nutzer beinhaltet, das Bodenbearbeitungsgerät an einen definierten Übergangsort der Umgebung zu tragen, welcher ein definierter Ort des jeweiligen Stockwerks oder der jeweiligen Höhenebene ist.

In der Umgebung bzw. Umgebungskarte sind Positionen von sogenannten Übergangshindernissen vermerkt, welche die Hindernisdetektionseinrichtung des Bodenbearbeitungsgerätes bei der Fortbewegung des Bodenbearbeitungsgerätes durch die Umgebung erkennen kann, nämlich anhand eines Vergleichs mit bekannten in der Umgebungskarte gespeicherten Übergangshindernissen. Bei Erreichen eines Übergangshindernisses gibt das Bodenbearbeitungsgerät eine Mitteilung an einen Nutzer des Bodenbearbeitungsgerätes aus, dass das Bodenbearbeitungsgerät an einen anderen Ort transportiert werden möchte, da ihm selbst eine Fortbewegung an diesen Ort nicht möglich ist. Insbesondere empfiehlt sich die vorgenannte Ausgestaltung, wenn sich das Bodenbearbeitungsgerät entlang eines vordefinierten Fortbewegungspfades durch die Umgebung bewegt, bis schließlich das definierte Übergangshindernis erreicht wird, welches vorzugsweise das Ende des geplanten Fortbewegungspfades in einer bestimmten Etage eines Gebäudes bildet. Die Recheneinrichtung des Bodenbearbeitungsgerätes kann ein Transporterfordernis nicht nur feststellen, wenn ein vorgeplanter Fortbewegungspfad vollständig durchlaufen wurde, sondern alternativ oder zusätzlich auch dann, wenn ein bestimmter Zeitpunkt erreicht ist, eine bestimmte Zeitdauer abgelaufen ist oder wenn ein bestimmter Ort oder Teilbereich der Umgebung vollständig bearbeitet wurde bzw. alle ausführbaren Bodenbearbeitungstätigkeiten erledigt sind. Gemäß einer besonders einfachen Ausgestaltung kann das Bodenbearbeitungsgerät das Transporterfordernis durch seine pure Anwesenheit an der Position des Übergangshindernisses an den Nutzer melden. Wenn der Nutzer dann zufällig an dem Übergangshindernis vorbeikommt und das Bodenbearbeitungsgerät dort erblickt, kann er auf das Transporterfordernis aufmerksam werden und das Bodenbearbeitungsgerät an eine ihm bekannte Position innerhalb der Umgebung tragen, insbesondere einen Ort in einer anderen Etage des Gebäudes. Das Bodenbearbeitungsgerät schlägt dem Nutzer mit dem gemeldeten Transporterfordernis einen Ort vor, an welchem das Bodenbearbeitungsgerät abzusetzen ist. Der Nutzer kann dann diesem Ortsvorschlag folgen. Derartige Übergangsorte können auch zuvor von dem Nutzer selbst definiert worden sein, so dass das Bodenbearbeitungsgerät lediglich noch einen Hinweis wie "Bitte zu dem definierten Übergangsort tragen" äußern muss. Grundsätzlich ist es auch möglich, dass der Nutzer ein von dem Bodenbearbeitungsgerät mitgeteiltes Transporterfordernis ablehnt. Dazu kann der Nutzer beispielsweise an dem Bodenbearbeitungsgerät selbst, insbesondere dessen Kommunikationsschnittstelle oder Eingabeeinrichtung, wie beispielsweise eine Tastatur oder ein Touchscreen, oder auch mittels eines in Kommunikationsverbindung mit der Kommunikationsschnittstelle des Bodenbearbeitungsgerätes stehenden externen Endgerätes, beispielsweise ein Mobiltelefon oder ähnliches, eine Eingabe tätigen. Sofern der Nutzer die erfindungsgemäße Übertragungsfunktion des Bodenbearbeitungsgerätes zeitweise gar nicht nutzen möchte, kann er diese Funktion des Bodenbearbeitungsgerätes auch wahlweise ausschalten. Die Recheneinrichtung des Bodenbearbeitungsgerätes kann einen Transport des Bodenbearbeitungsgerätes an einen neuen Ort, insbesondere den definierten Übergangsort, auf unterschiedliche Art und Weise erkennen. Zum einen ist es möglich, dass ein Nutzer einen Transport des Bodenbearbeitungsgerätes an einen neuen Ort meldet. Dies kann beispielsweise über eine Bedieneinrichtung des Bodenbearbeitungsgerätes, beispielsweise eine Tastatur oder ein Touchscreen, erfolgen. Alternativ kann der Nutzer eine auf einem externen Endgerät installierte Applikation nutzen. Alternativ ist es möglich, dass die Recheneinrichtung des Bodenbearbeitungsgerätes eine Basisstation an einem neuen Ort der Umgebung erkennt und damit eine Information darüber erhält, in welchem Umgebungsbereich sich das Bearbeitungsgerät befindet. Darüber hinaus kann das Bodenbearbeitungsgerät ein Abheben des Bodenbearbeitungsgerätes von einer Fläche erkennen, sowie ebenso ein Wiederabsetzen des Bodenbearbeitungsgerätes auf eine Fläche. Dies kann beispielsweise durch einen Kontaktsensor erfolgen, welcher erkennt, dass ein Kontakt zwischen dem Bodenbearbeitungsgerät und der Bodenfläche aufgehoben bzw. wieder hergestellt wurde. Derartige Sensoren sind beispielsweise als sogenannte "Kidnap-Sensoren" bekannt. Beispielsweise kann ein elektrischer Kontakt eine Verlagerung einer Radaufhängung erkennen, welche durch ein Abheben des Bodenbearbeitungsgerätes von dem Boden ausgelöst wird. Wenn das Bodenbearbeitungsgerät wieder abgesetzt wird und das Rad entsprechend wieder auf das Gerätegehäuse des Bodenbearbeitungsgerätes zubewegt wird, kann die Recheneinrichtung auf ein Absetzen an einem anderen Ort der Umgebung schließen. Alternativ kann auch mittels eines Lagesensors oder Beschleunigungssensors ein Transportvorgang und dessen Abschluss anhand der detektierten Bewegungsvorgänge erkannt werden.

Die Umgebungskarte des Bodenbearbeitungsgerätes weist mehrere Umgebungsteilbereiche auf, die verschiedenen Stockwerken oder Höhenebenen eines Gebäudes zugehörig sind, wobei die Umgebungsteilbereiche durch definierte Übergangspunkte logisch miteinander verbunden sind. Jeder definierte Übergangspunkt kann insbesondere Teil eines definierten Übergangshindernisses sein, so dass der Übergangspunkt örtlich mit dem Übergangshindernis übereinstimmt. Grundsätzlich ist es jedoch auch möglich, dass der definierte Übergangspunkt an einem anderen Ort definiert ist, als dem Standpunkt des Übergangshindernisses selbst. Der Nutzer des Bodenbearbeitungsgerätes bringt verschiedene Ebenen eines Gebäudes, welche Stockwerke, Podeste oder andere unterschiedliche Höhenebenen sein können, vorzugsweise in eine logische Reihenfolge bezogen auf deren absolute Höhe über einer Bezugsebene, so dass für die Recheneinrichtung bekannt ist, welche Umgebungsteilbereiche, insbesondere Etagen oder Ebenen, direkt zueinander benachbart sind. Die zu den Umgebungsteilbereichen gehörenden Umgebungsteilkarten, insbesondere Teilbereichsgrundrisse, können dann bezogen auf deren Höheebenen logisch gestapelt werden. Es werden Ebenen definiert, die direkte Nachbarn sind, und solche, die sich in größerer Distanz zueinander befinden, zum Beispiel ein Keller und eine erste Etage eines Gebäudes, welche nur bei Durchqueren einer ersten Etage erreicht werden können. Wenn das Bodenbearbeitungsgerät nun in eine andere Ebene des Gebäudes wechseln möchte, fährt es in der aktuell befahrenen Ebene an den definierten Übergangspunkt und sendet dort wie bereits beschrieben eine Information, insbesondere auch eine Push-Nachricht, eine E-Mail oder ähnliches, an den Nutzer, vorzugsweise mit dem Inhalt, dass das Bodenbearbeitungsgerät in eine bestimmte andere Ebene getragen werden möchte. Der Nutzer kann dann anhand der Nachricht, oder auch alternativ allein aufgrund der Position, an welcher sich das Bodenbearbeitungsgerät befindet, auf den Übertragungswunsch des Bodenbearbeitungsgerätes schließen. Durch die logische Verknüpfung eines ersten Übergangspunktes, welcher sich in einer ersten Ebene des Gebäudes befindet, mit einem definierten zweiten Übergangspunkt, welcher sich in einer zweiten Ebene des Gebäudes befindet, kann die Recheneinrichtung des Bodenbearbeitungsgerätes die Umgebungsteilbereiche der Umgebungskarte so zusammensetzen, als wenn sich diese in ein und derselben Ebene befinden würden. Auch bei Versetzen des Bodenbearbeitungsgerätes von der ersten in die zweite Ebene, oder umgekehrt, hat die Recheneinrichtung des Bodenbearbeitungsgerätes zu jeder Zeit Kenntnis darüber, an welcher Position und mit welcher Orientierung sich das Bodenbearbeitungsgerät aktuell in der Umgebung befindet. Die Navigation des Bodenbearbeitungsgerätes in den mehreren Umgebungsteilbereichen der Umgebungskarte kann ansonsten wie im Stand der Technik für nur eine Ebene bekannt erfolgen. Das Übergangshindernis, welches insbesondere eine Stufe oder eine Treppe zwischen verschiedenen Ebenen der Umgebung sein kann, überwindet das Bodenbearbeitungsgerät mittels manuellem Einschreiten des Nutzers.

Das ausgegebene Transporterfordernis beinhaltet die Aufforderung an den Nutzer, das Bodenbearbeitungsgerät an einen definierten Übergangsort der Umgebung zu tragen, wobei die Kommunikationsschnittstelle ausgebildet ist, das Transporterfordernis als Sprachsignal, als Lichtsignal oder als Mitteilung an ein mit der Kommunikationsschnittstelle des Bodenbearbeitungsgerätes in Kommunikationsverbindung stehendes externes Endgerät des Nutzers auszugeben. Der Nutzer kann die Nachricht über das Transporterfordernis somit auf unterschiedliche Art und Weise erhalten. Beispielsweise kann das Bodenbearbeitungsgerät einen Lautsprecher aufweisen, der eine Sprachnachricht an den Nutzer übermittelt. Des Weiteren kann auch ein Display vorgesehen sein, auf welchem der Nutzer eine Textnachricht, Bilddarstellung oder ähnliches erhält. Alternativ können auch Leuchtdioden oder andere optische Anzeigeelemente vorgesehen sein, die dem Nutzer eine codierte Information über das Transporterfordernis übermitteln. Gemäß einer besonderen Ausgestaltung, kann der Nutzer auf einem externen Endgerät, beispielsweise einem Mobiltelefon, einem Tablet, einem Laptop oder ähnlichem, eine Mitteilung angezeigt bekommen. Das Bodenbearbeitungsgerät und das externe Gerät können über ein gemeinsames Datenkommunikationsnetz, beispielsweise ein WLAN oder auch das Internet, Daten und Informationen austauschen. Insbesondere empfiehlt es sich, dass auf dem externen Endgerät des Nutzers eine Applikation installiert ist, die der Kommunikation mit dem Bodenbearbeitungsgerät dient.

Es wird des Weiteren vorgeschlagen, dass in der Umgebungskarte des Bodenbearbeitungsgerätes zumindest eine Warteposition definiert ist, an welcher das Bodenbearbeitungsgerät nach Ermitteln des Transporterfordernisses und Meldung an den Nutzer auf den Nutzer wartet. Die Warteposition kann unmittelbar neben dem in der Umgebungskarte gespeicherten Übergangshindernis liegen oder insbesondere deckungsgleich mit dem Übergangspunkt sein, welcher eine logische Verbindung zwischen zwei Umgebungsteilbereichen der Umgebungskarte herstellt. Sobald die Recheneinrichtung des Bodenbearbeitungsgerätes ein Transporterfordernis erkannt hat, kann es die Warteposition ansteuern und/ oder an dieser stehen bleiben und dann die Meldung an den Nutzer ausgeben. Das Bodenbearbeitungsgerät wartet an der dem Nutzer bekannten Warteposition, um von dem Nutzer in eine andere Ebene der Umgebung umgesetzt zu werden. Das Bodenbearbeitungsgerät fährt somit einen definierten Verbindungspunkt zwischen den Umgebungsteilbereichen an, wenn ein Ebenenwechsel ansteht.

In diesem Zusammenhang wird vorteilhaft vorgeschlagen, dass die Recheneinrichtung ausgebildet ist, ein Warten des Bodenbearbeitungsgerätes an der Warteposition zu beenden, wenn seit Beginn des Wartens eine Zeitdauer vergangen ist, die eine definierte Maximalzeitspanne überschreitet. Die definierte Maximalzeitspanne kann vorzugsweise durch einen Nutzer definiert werden. Alternativ kann die Maximalzeitspanne jedoch auch in einer Speichereinrichtung des Bodenbearbeitungsgerätes bereits durch den Hersteller des Bodenbearbeitungsgerätes gespeichert sein. Die Maximalzeitspanne bestimmt denjenigen Zeitraum, über welchen das Bodenbearbeitungsgerät für die Übertragung an einen Übergangsort aktiv bleibt und auf den Nutzer wartet. Sobald diese Maximalzeitspanne überschritten wird, ohne dass der Nutzer aktiv wurde, beendet das Bodenbearbeitungsgerät seine Wartetätigkeit und nimmt beispielsweise einen inaktiven Ruhezustand ein oder wendet sich weiteren Bodenbearbeitungstätigkeiten auf derselben Ebene der Umgebung zu. Auch kann das Bodenbearbeitungsgerät beispielsweise an eine Basisstation oder Ladestation zurückkehren, um dort einen Service zu erhalten. Die definierte Maximalzeitspanne kann vorzugsweise Wartezeiten zwischen einer und zehn Stunden beinhalten. Diese Wartezeit entspricht üblichen Abwesenheitszeiten eines Nutzers in beispielsweise einem häuslichen Bereich oder einer Büroumgebung. Die Wartetätigkeit des Bodenbearbeitungsgerätes kann zusätzlich oder alternativ auch dadurch begrenzt sein, dass der Akkumulator des Bodenbearbeitungsgerätes einen definierten Akkumulatorladestand unterschreitet. Das Bodenbearbeitungsgerät begrenzt die Wartetätigkeit somit in Abhängigkeit von einer aktuellen Ladekapazität des Akkumulators. Fällt die Ladekapazität während einer Wartetätigkeit unter einen definierten Grenzwert, bricht das Bodenbearbeitungsgerät die Wartetätigkeit ab und nutzt die Restkapazität des Akkumulators vorzugsweise für beispielsweise eine Rückkehr zu einer Basisstation, um dort den Akkumulator wieder aufzuladen.

Die Hindernisdetektionseinrichtung des Bodenbearbeitungsgerätes kann ausgebildet sein, eine Anwesenheit des Nutzers in der Umgebung des Bodenbearbeitungsgerätes zu erkennen und an die Recheneinrichtung zu melden, wobei die Recheneinrichtung ausgebildet ist, daraufhin das manuelle Transporterfordernis an den Nutzer zu melden. Gemäß dieser Ausgestaltung erfolgt die Mitteilung des Transporterfordernisses an den Nutzer nur dann, wenn die Hindernisdetektionseinrichtung festgestellt hat, dass momentan tatsächlich auch ein Nutzer in der Umgebung des Bodenbearbeitungsgerätes anwesend ist. Die Umgebung des Bodenbearbeitungsgerätes kann dabei so definiert sein, dass der Nutzer sich in Sichtweite oder Hörweite zu dem Bodenbearbeitungsgerät befindet. Gemäß dieser Ausgestaltung entfällt die Mitteilung des Bodenbearbeitungsgerätes, wenn keine Anwesenheit eines Nutzers detektiert werden kann. Insbesondere kann beispielsweise durch sogenanntes "Geofencing" ermittelt werden, ob sich ein mobiles Endgerät des Nutzers in der Umgebung des Bodenbearbeitungsgerätes befindet. Anhand der Anwesenheit des externen Endgerätes des Nutzers, beispielsweise seines persönlichen Mobiltelefons, kann darauf geschlossen werden, dass der Nutzer sich aktuell in der Umgebung, nämlich in der Wohnung oder auf derselben Etage, befindet. Des Weiteren kann die Recheneinrichtung des Bodenbearbeitungsgerätes jedoch auch anhand der Detektionssignale der Hindernisdetektionseinrichtung ermitteln, ob sich ein sich fortbewegendes Objekt innerhalb der Umgebung befindet. Anhand der Bewegung oder gegebenenfalls auch der Bewegungsgeschwindigkeit kann festgestellt werden, ob es sich bei dem "Objekt" um eine Person handelt.

Gemäß einer vorteilhaften Ausführungsform wird vorgeschlagen, dass die Recheneinrichtung des Bodenbearbeitungsgerätes eingerichtet ist, eine Fortbewegung des Bodenbearbeitungsgerätes im Voraus zu planen. Insbesondere kann das Planen einer oder mehrerer Fortbewegungen durch Erstellen eines Einsatzplanes erfolgen, welcher zeitliche und/oder örtliche Vorgaben zum Ausführen von Bodenbearbeitungstätigkeiten durch das Bodenbearbeitungsgerät aufweist. Vorzugsweise kann der Einsatzplan einerseits Zeitangaben für Bodenbearbeitungstätigkeiten und andererseits auch Zeitangaben für einen Wechsel zwischen zwei verschiedenen Ebenen der Umgebung aufweisen. Sofern ein Ebenenwechsel nicht möglich ist, da sich derzeit kein Nutzer in der Umgebung befindet, welcher das Bodenbearbeitungsgerät an einen neuen Übergangsort transportieren kann, sind in einem Speicher des Bodenbearbeitungsgerätes vorzugsweise andere Bodenbearbeitungstätigkeiten gespeichert, insbesondere mit Bezug auf eine Abfolge priorisiert, die das Bodenbearbeitungsgerät ausführt, anstatt entsprechende Bodenbearbeitungstätigkeiten in einer neuen Ebene der Umgebung durchzuführen. Die Zeitpunkte bzw. Zeitfenster für einen Ebenenwechsel sind vorzugsweise unabhängig von Zeitpunkten oder Zeitfenstern für Bodenbearbeitungstätigkeiten festgelegt. Eine Mitteilung eines Transporterfordernisses durch das Bodenbearbeitungsgerät kann des Weiteren auch während einer Ausführung einer Bodenbearbeitungstätigkeit erfolgen. Alternativ kann die Mitteilung an den Nutzer auch aus einem Ruhe- oder Standby-Zustand des Bodenbearbeitungsgerätes heraus erfolgen.

Schließlich kann vorgesehen sein, dass die Recheneinrichtung ausgebildet ist, nach Lokalisierung des Bodenbearbeitungsgerätes an dem definierten Übergangsort einen Steuerbefehl an die Antriebseinrichtung zu übermitteln, welcher bewirkt, dass das Bodenbearbeitungsgerät sofort oder zu einem definierten Zeitpunkt eine Bodenbearbeitungstätigkeit aufnimmt oder zu einer in der Umgebungskarte markierten Basisstation fährt. Sobald das Bodenbearbeitungsgerät somit erkannt hat, dass es sich an dem definierten Übergangsort befindet, steuert die Recheneinrichtung vorteilhaft die weiteren Aktivitäten, insbesondere Bodenbearbeitungstätigkeiten, des Bodenbearbeitungsgerätes in der neuen Ebene, innerhalb welcher sich der definierte Übergangsort befindet. Die im Voraus definierten Tätigkeiten können vorsehen, dass das Bodenbearbeitungsgerät zunächst zu einer in der Ebene des Übergangsortes befindlichen Basisstation fährt und dort auf einen vordefinierten Startzeitpunkt für eine Bodenbearbeitungstätigkeit wartet. Sofern keine Basisstation vorhanden ist, kann das Bodenbearbeitungsgerät auch sofort oder zeitverzögert eine Bodenbearbeitungstätigkeit ausführen. Sofern die Bodenbearbeitungstätigkeit unmittelbar mit dem Wechsel in die andere Ebene ansteht, beginnt das Bodenbearbeitungsgerät vorzugsweise sofort mit der Ausführung.

### Kurze Beschreibung der Zeichnungen

Im Folgenden wird die Erfindung anhand von Ausführungsbeispielen näher erläutert. Es zeigen:
- Fig. 1: ein erfindungsgemäßes Bodenbearbeitungsgerät;
- Fig. 2: eine Umgebung des Bodenbearbeitungsgerätes mit mehreren Ebenen;
- Fig. 3: ein mit dem Bodenbearbeitungsgerät in Kommunikationsverbindung stehendes externes Endgerät, welches einen Einsatzplan für das Bodenbearbeitungsgerät anzeigt;
- Fig. 4: das externe Endgerät bei Mitteilung eines Transporterfordernisses an einen Nutzer.

### Beschreibung der Ausführungsformen

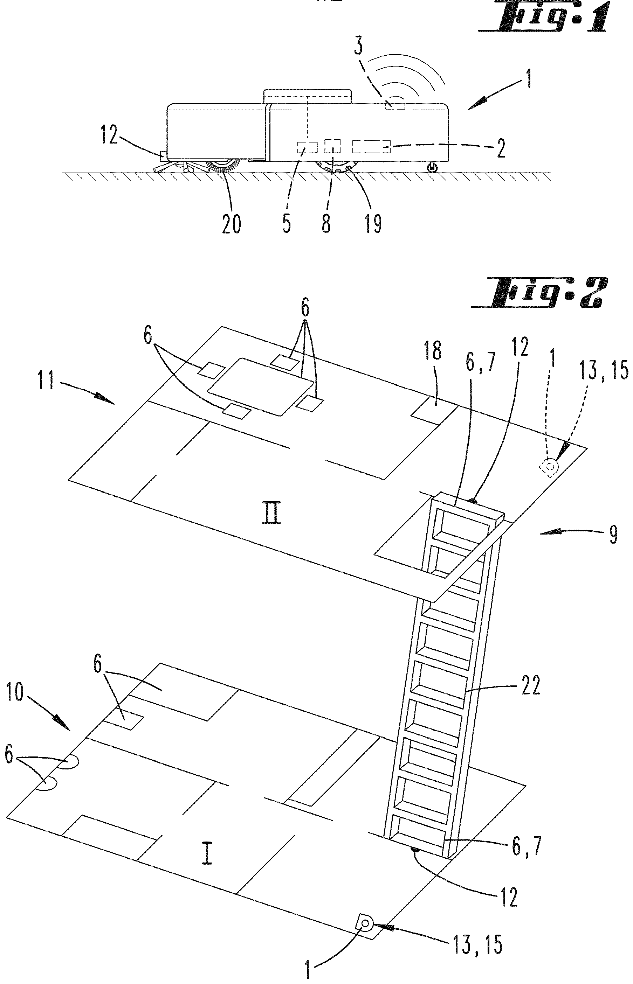

Figur 1 zeigt ein sich selbsttätig fortbewegendes Bodenbearbeitungsgerät 1, welches hier beispielhaft als autonomer Reinigungsroboter ausgebildet ist. Das Bodenbearbeitungsgerät 1 weist mittels einer Antriebseinrichtung 2 angetriebene Räder 19 sowie ein Reinigungselement 20 auf, welches hier beispielsweise eine ebenfalls rotierend angetriebene Reinigungswalze ist, die sich um eine im Wesentlichen horizontale Achse dreht. Um Hindernisse 6, 7 in der Umgebung des Bodenbearbeitungsgerätes 1 detektieren zu können, verfügt das Bodenbearbeitungsgerät 1 über eine Hindernisdetektionseinrichtung 5, hier beispielsweise in der Form eines optischen Abstandssensors, insbesondere ausgebildet als 360 Grad-Triangulationssystem, welches Hindernisse 6, 7 rundum das Bodenbearbeitungsgerät 1 detektieren kann. Bei den Hindernissen 6, 7 kann es sich um Raumbegrenzungen von Räumen innerhalb eines Gebäudes handeln oder auch um Möbelstücke, Dekorationsgegenstände, Treppenstufen oder ähnliches. Eine Recheneinrichtung 8 des Bodenbearbeitungsgerätes 1 wertet die von der Hindernisdetektionseinrichtung 5 detektierten Daten aus und erstellt daraus eine Umgebungskarte 9, welche im Wesentlichen einem Grundriss der Umgebung entspricht. Anhand dieser Umgebungskarte 9 kann sich die Recheneinrichtung 8 für eine Selbstlokalisierung und Navigation des Bodenbearbeitungsgerätes 1 innerhalb der Umgebung orientieren. Des Weiteren weist das Bodenbearbeitungsgerät 1 eine Kommunikationsschnittstelle 3 auf, um Informationen an einen Nutzer des Bodenbearbeitungsgerätes 1 zu übermitteln. Die Kommunikationsschnittstelle 3 kann einerseits direkt eine Sprachausgabe oder optische Signalausgabe tätigen oder andererseits Informationsdaten an ein in Datenkommunikation mit der Kommunikationsschnittstelle 3 stehendes externes Endgerät 14 des Nutzers übermitteln. Bei dem externen Endgerät 14 kann es sich beispielsweise um ein Mobiltelefon, einen Laptop-Computer, ein Tablet oder ähnliches handeln. Mittels des externen Endgerätes 14 kann der Nutzer andererseits Informationen oder Steuerbefehle an die Kommunikationsschnittstelle 3 des Bodenbearbeitungsgerätes 1 übermitteln. Beispielsweise kann der Nutzer mit Hilfe des externen Endgerätes 14 einen Einsatzplan 16 für das Bodenbearbeitungsgerät 1 erstellen, welcher Einsatzplan 16 Vorgaben 17 aufweist, die beispielsweise zeitlich und/oder örtlich geplante Bodenbearbeitungstätigkeiten betreffen. Diese und andere Informationen 4 von dem Bodenbearbeitungsgerät 1 oder für das Bodenbearbeitungsgerät 1 können als Information 4 auf einem Display 21 des externen Endgerätes 14 angezeigt werden.

Figur 2 zeigt eine beispielhafte Umgebung des Bodenbearbeitungsgerätes 1, nämlich in Form einer Umgebungskarte 9, welche einen Grundriss mit zwei verschiedenen Umgebungsteilbereichen 10, 11 eines Gebäudes enthält. Bei dem ersten Umgebungsteilbereich 10 handelt es sich um eine erste Ebene des Gebäudes. Der zweite Umgebungsteilbereich 11 ist entsprechend eine zweite, höher liegende Ebene des Gebäudes. Die beiden Umgebungsteilbereiche 10, 11 sind über eine Treppe 22 miteinander verbunden. Die Umgebungsteilbereiche 10, 11 sind zur Integration in ein und dieselbe Umgebungskarte 9 mit Hilfe von Übergangspunkten 12 logisch miteinander verknüpft. Die Verknüpfung ist derart, dass die Recheneinrichtung 8 den Übergangspunkt 12 des ersten Umgebungsteilbereiches 10 als benachbarten Ort des korrespondierenden Übergangspunktes 12 des zweiten Umgebungsteilbereiches 11 identifiziert und miteinander in Beziehung bringt, um das Bodenbearbeitungsgerät 1 in der aus beiden Umgebungsteilbereichen 10, 11 gebildeten Umgebungskarte 9 zu orientieren. In jedem der Umgebungsteilbereich 10, 11 ist des Weiteren ein Übergangsort 13 definiert, welcher hier einer Warteposition 15 für das Bodenbearbeitungsgerät 1 entspricht. Auf die Bedeutung des Übergangsortes 13 und der Warteposition 15 wird nachfolgend noch eingegangen. Sowohl die Übergangsorte 13, als auch die Wartepositionen 15 können vorzugsweise durch den Nutzer des Bodenbearbeitungsgerätes 1 in der Umgebungskarte 9 definiert sein, beispielsweise mittels einer Eingabe über das externe Endgerät 14. In der Umgebungskarte 9 ist des Weiteren auch eine aktuelle Position des Bodenbearbeitungsgerätes 1 markiert. In Figur 2 befindet sich das Bodenbearbeitungsgerät 1 beispielsweise an dem Übergangsort 13 des ersten Umgebungsteilbereiches 10, welcher gleichzeitig als Warteposition 15 für das Bodenbearbeitungsgerät 1 definiert ist. Damit das Bodenbearbeitungsgerät 1 beispielsweise einen Akkumulator wiederaufladen kann, befindet sich in der Umgebung eine Basisstation 18, hier beispielsweise in einem Raum des zweiten Umgebungsteilbereiches 11. Es können sich auch weitere Basisstationen 18 innerhalb der Umgebung befinden, beispielsweise jeweils eine Basisstation 18 pro Umgebungsteilbereich 10, 11.

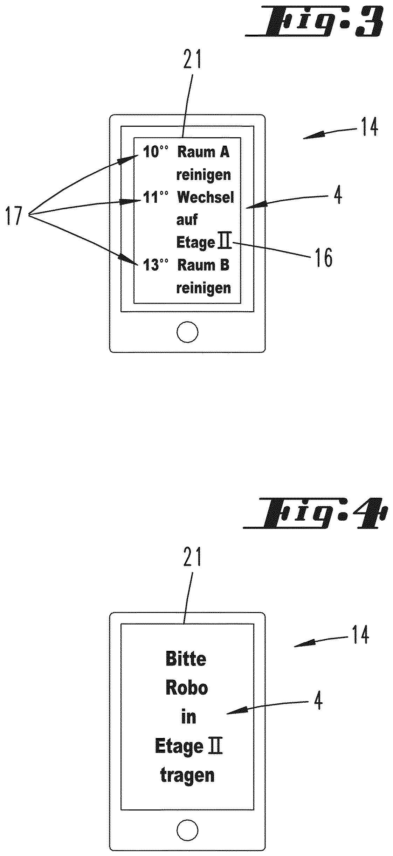

Die Figuren 3 und 4 zeigen beispielhaft ein externes Endgerät 14, welches zur Kommunikation mit dem Bodenbearbeitungsgerät 1 ausgebildet ist. Auf dem externen Endgerät 14 ist eine Applikation installiert, mit deren Hilfe Informationen 4 zwischen dem Bodenbearbeitungsgerät 1 und dem Nutzer ausgetauscht und auf einem Display 21 angezeigt werden können.

Figur 3 zeigt beispielsweise einen Einsatzplan 16 für das Bodenbearbeitungsgerät 1. Der Einsatzplan 16 weist als Vorgaben 17 mehrere Aktionen des Bodenbearbeitungsgerätes 1 auf. Die Vorgaben 17 beinhalten jeweils eine Definition einer Zeit und eines Ortes zum Ausführen einer Tätigkeit. Hier handelt es sich bei den Vorgaben 17 beispielsweise um geplante Bodenbearbeitungstätigkeiten, wie "Raum A reinigen" um 10:00 Uhr und "Raum B reinigen" um 13:00 Uhr. Zeitlich dazwischen liegt eine Vorgabe 17, die um 11:00 Uhr einen "Wechsel auf Etage II" für das Bodenbearbeitungsgerät 1 vorgibt. Für den Wechsel auf Etage II, nämlich hier beispielsweise den zweiten Umgebungsteilbereich 11, kann ein Zeitfenster definiert sein, innerhalb welchem der Wechsel stattzufinden hat. Hier beträgt die für den Wechsel vorgegebene definierte Maximalzeitspanne, innerhalb welcher ein Wechsel möglich ist, zwei Stunden, nämlich von 11:00 Uhr bis 13:00 Uhr. Sofern ein Wechsel innerhalb dieses Zeitfensters nicht stattfindet, wird Die Ausführung des Einsatzplans 16 abgebrochen. Ein Nutzer kann dann beispielsweise über die Beendigung des Einsatzplanes 16 informiert werden.

Figur 4 zeigt eine Aufforderung an einen Nutzer, das Bodenbearbeitungsgerät 1 in Etage II zu tragen, damit das Bodenbearbeitungsgerät 1 zum Abarbeiten des Einsatzplanes 16 von dem ersten Umgebungsteilbereich 10 in den zweiten Umgebungsteilbereich 11 gelangen kann, nämlich mittels Überwindung der Treppe 22 durch den Nutzer.

Die Erfindung funktioniert nun gemäß einem von mehreren möglichen Ausführungsbeispielen so, dass das Bodenbearbeitungsgerät 1 zunächst Hindernisse 6, 7 in jedem der Umgebungsteilbereiche 10, 11 detektiert. Zu jedem der Umgebungsteilbereiche 10, 11 kann dann zunächst eine separate Teilbereichskarte erstellt werden. Der Nutzer bringt die Umgebungsteilbereiche 10, 11 zur Erstellung der Umgebungskarte 9 anschließend in eine logische Reihenfolge, derart, dass eine Reihenfolge bezogen auf die Höhenlage des jeweiligen Umgebungsteilbereiches 10, 11 erreicht ist. Dabei definiert der Nutzer auch die Übergangspunkte 12 zwischen den Umgebungsteilbereichen 10, 11, die die Recheneinrichtung 8 für eine logische Integration der beiden Umgebungsteilbereiche 10, 11 in dieselbe Umgebungskarte 9 nutzt. Vorzugsweise im Bereich der Übergangspunkte 12 definiert der Nutzer des Weiteren Wartepositionen 15, an welchen das Bodenbearbeitungsgerät 1 eine definierte Wartestellung einnehmen kann, um darauf zu warten, dass der Nutzer das Bodenbearbeitungsgerät 1 von dem ersten Umgebungsteilbereich 10 in den zweiten Umgebungsteilbereich 11 trägt, oder umgekehrt. Die Warteposition 15 befindet sich vorzugsweise nicht unmittelbar in einem Durchgangsweg des Nutzers, sondern hält beispielsweise den Zugang zu der Treppe 22 frei, damit der Nutzer nicht über das Bodenbearbeitungsgerät 1 stolpert oder davor tritt. Des Weiteren kann zusätzlich ein Übergangsort 13 definiert sein, in welchem der Nutzer das Bodenbearbeitungsgerät 1 üblicherweise absetzt. Ein solcher Übergangsort 13 kann ebenfalls in beiden Umgebungsteilbereichen 10, 11 definiert sein. Dieser Übergangsort 13 kann insbesondere mit der Warteposition 15 übereinstimmen. Alternativ kann es sich bei der Warteposition 15 und dem Übergangsort 13 jedoch auch um unterschiedliche Orte der jeweiligen Etage handeln. Beispielsweise kann ein Übergangsort 13, an welchem der Nutzer das Bodenbearbeitungsgerät 1 in einer neuen Etage platziert, auch an der Basisstation 18 (oder einem anderen Ort) liegen.

Ausgehend von seinem initialen Standort in dem ersten Umgebungsteilbereich 10, nämlich der unteren Etage des Gebäudes, führt das Bodenbearbeitungsgerät 1 zunächst Vorgaben 17 des Einsatzplanes 16 aus, nämlich hier beispielsweise die Reinigung eines Raumes, welche um 10:00 Uhr geplant ist. Nach Beendigung der Reinigung dieses Raumes entnimmt die Recheneinrichtung 8 des Bodenbearbeitungsgerätes 1 die Information, dass das Bodenbearbeitungsgerät 1 um 11:00 Uhr auf Etage II wechseln soll, nämlich in den höher liegenden zweiten Umgebungsteilbereich 11. Da sich das Bodenbearbeitungsgerät 1 nicht selbsttätig von dem ersten Umgebungsteilbereich 10 in den zweiten Umgebungsteilbereich 11 bewegen kann, da dafür die Treppe 22 überwunden werden muss, sendet das Bodenbearbeitungsgerät 1 mittels seiner Kommunikationsschnittstelle 3 eine Aufforderung an den Nutzer, das Bodenbearbeitungsgerät 1 in Etage II zu tragen. Dafür erscheint um 11:00 Uhr (oder auch zeitlich davor) die in Figur 4 dargestellte Information 4 auf dem Display 21 des externen Endgerätes 14 des Nutzers, nämlich die Aufforderung "Bitte Robo in Etage II tragen". Alternativ kann die Information 4 über das Transporterfordernis auch per E-Mail an den Nutzer übermittelt werden oder per Sprachausgabe oder optischer Signalausgabe über die Kommunikationsschnittstelle 3 des Bodenbearbeitungsgerätes 1 ausgegeben werden. Damit der Nutzer das Bodenbearbeitungsgerät 1 zum Transport leicht auffindet, hat sich das Bodenbearbeitungsgerät 1 mittels der Antriebseinrichtung 2 an die dem Nutzer bekannte definierte Warteposition 15 bewegt, nämlich in den Bereich vor dem Treppenaufgang. Der Nutzer erkennt zusätzlich anhand der Anwesenheit des Bodenbearbeitungsgerätes 1 an der Warteposition 15, dass das Bodenbearbeitungsgerät 1 in den zweiten Umgebungsteilbereich 11 getragen werden soll. Gemäß einer alternativen Ausführungsform wäre es auch möglich, dass die Darstellung der Information 4 auf dem externen Endgerät 14 des Nutzers ganz entfällt und das Bodenbearbeitungsgerät 1 das manuelle Transporterfordernis dadurch anzeigt, dass es sich an der Warteposition 15 befindet. Wenn der Nutzer dann zufällig des Weges kommt, kann er das Bodenbearbeitungsgerät 1 in den jeweils anderen Umgebungsteilbereich 10, 11 tragen.

Nachdem der Nutzer das Bodenbearbeitungsgerät 1 in den neuen Umgebungsteilbereich 11, nämlich hier den höher gelegenen zweiten Umgebungsteilbereich 11 getragen hat, kann dieses den vorgeplanten Einsatzplan 16 weiter abarbeiten. Vorzugsweise stellt der Nutzer das Bodenbearbeitungsgerät 1 an dem dafür vorgesehen Übergangsort 13 des zweiten Umgebungsteilbereiches 11 ab, so dass die Recheneinrichtung 8 unmittelbar die Navigation anhand der Umgebungskarte 9 fortführen kann und sich nicht zunächst innerhalb der Umgebungskarte 9 lokalisieren muss. Sodann kann das Bodenbearbeitungsgerät 1 die nächste Reinigungsaufgabe erfüllen oder hier beispielsweise bis zu der nächsten Vorgabe 17 um 13:00 Uhr warten und dann die Bodenbearbeitungstätigkeit "Raum B reinigen" ausführen. Wenn keine weitere Vorgabe 17 in dem Einsatzplan 16 offen ist, kann das Bodenbearbeitungsgerät 1 beispielsweise zu der Basisstation 18 fahren und dort auf einen weiteren Einsatz oder Steuerbefehl durch den Nutzer warten.

Gemäß einer anderen alternativen Ausführung können die Übergangsorte 13 in den Umgebungsteilbereichen 10, 11 dadurch definiert werden, dass der Nutzer das Bodenbearbeitungsgerät 1 an einem bestimmten Ort der jeweiligen Etage absetzt und diesen Ort damit automatisch als Übergangsort 13 definiert. Das Bodenbearbeitungsgerät 1 lokalisiert sich in diesem Fall dann selbst innerhalb der Umgebungskarte 9. Für einen Transport des Bodenbearbeitungsgerätes 1 zwischen den Umgebungsteilbereichen 10, 11 kann der Nutzer oder auch der Hersteller werkseitig eine Wartezeit vorgeben, die das Bodenbearbeitungsgerät 1 an der Warteposition 15 verharrt und darauf wartet, dass der Nutzer das Bodenbearbeitungsgerät 1 in den gewünschten Umgebungsteilbereich 10, 11 trägt. Diese Wartezeit definiert eine Maximalzeitspanne ab demjenigen Zeitpunkt, zu welchem das Bodenbearbeitungsgerät 1 die Warteposition 15 einnimmt. Diese definierte Maximalzeitspanne kann beispielsweise eine bis zu mehreren Stunden dauern. Vorzugsweise entspricht die Maximalzeitspanne einer üblichen maximalen Abwesenheitszeitspanne des Nutzers. Es kann auch vorgesehen sein, dass der Nutzer bestimmte Zeiträume definiert, in denen (ausschließlich) ein Wechsel zwischen den Umgebungsteilbereichen 10, 11 stattfinden darf. Damit kann ausgeschlossen werden, dass das Bodenbearbeitungsgerät 1 beispielsweise nachts vergeblich auf einen Transport durch den Nutzer wartet. Eine solche Zeitspanne kann beispielsweise zu Anwesenheitszeiten des Nutzers zwischen 17:00 Uhr und 21:00 Uhr definiert sein. Die für einen Ebenenwechsel definierten Zeiträume können unabhängig von den sonstigen geplanten Reinigungsaufgaben des Einsatzplans 16 definiert sein.

Gemäß einer weiteren, besonders bevorzugten Ausführungsform kann die Anzeige eines manuellen Transporterfordernisses davon abhängen, dass die Anwesenheit des Nutzers auch tatsächlich in der Umgebung des Bodenbearbeitungsgerätes 1 detektiert wird. Durch diese Ausgestaltung kann ausgeschlossen werden, dass der Nutzer Aufforderungen zum Transport des Bodenbearbeitungsgerätes 1 erhält, obwohl er sich momentan gar nicht in der Nähe des Bodenbearbeitungsgerätes 1 aufhält und somit gar nicht in der Lage ist, das Bodenbearbeitungsgerät 1 von einem Umgebungsteilbereich 10, 11 in einen anderen Umgebungsteilbereich 11, 10 zu tragen. Die Anwesenheit des Nutzers kann beispielsweise mittels Geofencing ermittelt werden, bei welchem das externe Endgerät 14 des Nutzers in der Umgebung des Bodenbearbeitungsgerätes 1 detektiert wird. Alternativ kann die Hindernisdetektionseinrichtung 5 des Bodenbearbeitungsgerätes 1 ein sich bewegendes Objekt in der Nähe des Bodenbearbeitungsgerätes 1 detektieren und dieses als Nutzer annehmen. Sobald auf diese Art und Weise dann die Anwesenheit des Nutzers gemutmaßt wird, kann eine Information über ein Transporterfordernis von der Kommunikationsschnittstelle 3 des Bodenbearbeitungsgerätes 1 an den Nutzer übermittelt werden.

### Liste der Bezugszeichen

- 1: Bodenbearbeitungsgerät
- 2: Antriebseinrichtung
- 3: Kommunikationsschnittstelle
- 4: Information
- 5: Hindernisdetektionseinrichtung
- 6: Hindernis
- 7: Übergangshindernis
- 8: Recheneinrichtung
- 9: Umgebungskarte
- 10: Umgebungsteilbereich
- 11: Umgebungsteilbereich
- 12: Übergangspunkt
- 13: Übergangsort
- 14: Externes Endgerät
- 15: Warteposition
- 16: Einsatzplan
- 17: Vorgabe
- 18: Basisstation
- 19: Rad
- 20: Reinigungselement
- 21: Display
- 22: Treppe

## Patentansprüche

1. Sich selbsttätig fortbewegendes Bodenbearbeitungsgerät (1) mit einer Antriebseinrichtung (2) zur Fortbewegung des Bodenbearbeitungsgerätes (1) innerhalb einer Umgebung, einer Kommunikationsschnittstelle (3) zur Ausgabe von Informationen (4) an einen Nutzer des Bodenbearbeitungsgerätes (1), einer Hindernisdetektionseinrichtung (5) zur Detektion von Hindernissen (6, 7) innerhalb der Umgebung und einer Recheneinrichtung (8), welche eingerichtet ist, basierend auf den von der Hindernisdetektionseinrichtung (5) detektierten Hindernissen (6) eine Umgebungskarte (9) zu erstellen, das Bodenbearbeitungsgerät (1) anhand der Umgebungskarte (9) zu lokalisieren und Steuerbefehle an die Antriebseinrichtung (2) und die Kommunikationsschnittstelle (3) zu übermitteln, wobei die Recheneinrichtung (8) des Weiteren eingerichtet ist, zumindest ein nicht selbsttätig von dem Bodenbearbeitungsgerät (1) überwindbares Hindernis (6) innerhalb der Umgebungskarte (9) als ein Übergangshindernis (7) zu definieren, das Übergangshindernis (7) bei einer Fortbewegung durch die Umgebung anhand eines Vergleichs von aktuell detektierten Hindernissen (6) mit dem in der Umgebungskarte gespeicherten Übergangshindernis (7) zu identifizieren und bei Erreichen des Übergangshindernisses (7) ein manuelles Transporterfordernis mittels der Kommunikationsschnittstelle an den Nutzer zu melden, **dadurch gekennzeichnet, dass** die Umgebungskarte (9) mehrere Umgebungsteilbereiche (10, 11) aufweist, die verschiedenen Stockwerken oder Höhenebenen eines Gebäudes zugehörig sind, wobei die Umgebungsteilbereiche (10, 11) durch definierte Übergangspunkte (12) logisch miteinander verbunden sind, wobei die Verknüpfung derart ist, dass die Recheneinrichtung (8) den Übergangspunkt (12) eines ersten Umgebungsteilbereiches (10) als benachbarten Ort des korrespondierenden Übergangspunktes (12) eines zweiten Umgebungsteilbereiches (11) identifiziert und miteinander in Beziehung bringt, um das Bodenbearbeitungsgerät (1) in einer aus beiden Umgebungsteilbereichen (10, 11) gebildeten Umgebungskarte (9) zu orientieren, und wobei das ausgegebene Transporterfordernis eine Aufforderung an den Nutzer beinhaltet, das Bodenbearbeitungsgerät (1) an einen definierten Übergangsort (13) der Umgebung zu tragen, welcher ein definierter Ort des jeweiligen Stockwerks oder der jeweiligen Höhenebene ist.

2. Bodenbearbeitungsgerät (1) nach Anspruch 1, **dadurch gekennzeichnet, dass** ein Übergangspunkt (12) Teil eines definierten Übergangshindernisses (7) ist.

3. Bodenbearbeitungsgerät (1) nach Anspruch 1 oder 2, **dadurch gekennzeichnet, dass** das Übergangshindernis (7) eine Stufe oder eine Treppe ist.

4. Bodenbearbeitungsgerät (1) nach einem der vorhergehenden Ansprüche, **dadurch gekennzeichnet, dass** die Kommunikationsschnittstelle (3) ausgebildet ist, das Transporterfordernis als Sprachsignal, als Lichtsignal oder als Mitteilung an ein mit der Kommunikationsschnittstelle (3) des Bodenbearbeitungsgerätes in Kommunikationsverbindung stehendes externes Endgerät (14) des Nutzers auszugeben.

5. Bodenbearbeitungsgerät (1) nach einem der vorhergehenden Ansprüche, **dadurch gekennzeichnet, dass** in der Umgebungskarte (9) zumindest eine Warteposition (15) definiert ist, an welcher das Bodenbearbeitungsgerät (1) nach Ermitteln des Transporterfordernisses und Meldung an den Nutzer auf den Nutzer wartet.

6. Bodenbearbeitungsgerät (1) nach Anspruch 5, **dadurch gekennzeichnet, dass** die Recheneinrichtung (8) ausgebildet ist, ein Warten des Bodenbearbeitungsgerätes (1) an der Warteposition (15) zu beenden, wenn seit Beginn des Wartens eine Zeitdauer vergangen ist, die eine definierte Maximalzeitspanne überschreitet.

7. Bodenbearbeitungsgerät (1) nach einem der vorhergehenden Ansprüche, **dadurch gekennzeichnet, dass** die Hindernisdetektionseinrichtung (5) ausgebildet ist, eine Anwesenheit des Nutzers in der Umgebung des Bodenbearbeitungsgerätes (1) zu erkennen und an die Recheneinrichtung (8) zu melden, wobei die Recheneinrichtung (8) ausgebildet ist, daraufhin das manuelle Transporterfordernis an den Nutzer zu melden.

8. Bodenbearbeitungsgerät (1) nach einem der vorhergehenden Ansprüche, **dadurch gekennzeichnet, dass** die Recheneinrichtung (8) eingerichtet ist, eine Fortbewegung des Bodenbearbeitungsgerätes (1) im Voraus zu planen, insbesondere durch Erstellen eines Einsatzplanes (16), welcher zeitliche und/oder örtliche Vorgaben (17) zum Ausführen von Bodenbearbeitungstätigkeiten durch das Bodenbearbeitungsgerät (1) aufweist.

9. Bodenbearbeitungsgerät (1) nach einem der Ansprüche 4 bis 8, **dadurch gekennzeichnet, dass** die Recheneinrichtung (8) ausgebildet ist, nach Lokalisierung des Bodenbearbeitungsgerätes (1) an dem definierten Übergangsort (13) einen Steuerbefehl an die Antriebseinrichtung (2) zu übermitteln, welcher bewirkt, dass das Bodenbearbeitungsgerät (1) sofort oder zu einem definierten Zeitpunkt eine Bodenbearbeitungstätigkeit aufnimmt oder zu einer in der Umgebungskarte (9) markierten Basisstation (18) fährt.

## Claims

1. A self-propelled floor processing device (1) with a drive unit (2) for moving the floor processing device (1) within an environment, a communication interface (3) for outputting a message (4) to a user of the floor processing device (1), an obstacle detection unit (5) for detecting obstacles (6, 7) within the environment and a computing device (8), which is arranged to create an area map (9) based on the obstacles (6) detected by the obstacle detection unit (5), to localise the floor processing device (1) using the area map (9) and to transmit control commands to the drive unit (2) and the communication interface (3), wherein the computing device (8) is furthermore set up to define at least one obstacle (6) within the area map (9), which cannot be overcome automatically by the floor processing device (1), as a transition obstacle (7), to identify the transition obstacle (7) during a movement through the environment on the basis of a comparison of currently detected obstacles (6) with the transition obstacle (7) stored in the area map and to report a manual transport request to the user by means of the communication interface when the transition obstacle (7) is reached, **characterised in that** the area map (9) has a plurality of environmental areas (10, 11) which are associated with different storeys or height levels of a building, the environmental areas (10, 11) being logically connected to one another by defined transition points (12), wherein the linking is such that the computing device (8) identifies the transition point (12) of a first environmental area (10) as the neighbouring location of the corresponding transition point (12) of a second environmental area (11) and relates them to each other in order to position the floor processing device (1) in a environmental area (10, 11), and wherein the issued transport request contains a request to the user to carry the floor processing device (1) to a defined transition location (13) of the environment, which is a defined location of the respective floor or the respective height level.

2. The floor processing device (1) according to claim 1, **characterised in that** a transition point (12) is part of a defined transition obstacle (7).

3. The floor processing device (1) according to claim 1 or 2, **characterised in that** the transition obstacle (7) is a step or a staircase.

4. The floor processing device (1) according to one of the preceding claims, **characterised in that** the communication interface (3) is designed to transmit the transport request as a voice signal, as a light signal or as a message to an external terminal (14) of the user which is in communication with the communication interface (3) of the soil tillage implement.

5. The floor processing device (1) according to one of the preceding claims, **characterised in that** at least one waiting position (15) is defined in the area map (9), at which the floor processing device (1) waits for the user after the transport requirement has been determined and reported to the user.

6. The floor processing device (1) according to claim 5, **characterised in that** the computing device (8) is designed to terminate a wait of the floor processing device (1) at the waiting position (15) if a period of time has elapsed since the start of the wait which exceeds a defined maximum period of time.

7. The floor processing device (1) according to one of the preceding claims, **characterised in that** the obstacle detection device (5) is designed to detect a presence of the user in the vicinity of the floor processing device (1) and to report it to the computing device (8), the computing device (8) being designed to then report the manual transport request to the user.

8. The floor processing device (1) according to one of the preceding claims, **characterised in that** the computing device (8) is set up to plan a movement of the floor processing device (1) in advance, in particular by creating a deployment plan (16) which has temporal and/or local specifications (17) for carrying out floor processing operation by the floor processing device (1).

9. The floor processing device (1) according to one of claims 4 to 8, **characterised in that** the computing device (8) is designed to transmit a control command to the drive unit (2) after localisation of the floor processing device (1) at the defined transition location (13), which command causes the floor processing device (1) to start a floor processing operation immediately or at a defined time or to travel to a base station (18) marked in the area map (9).

## Revendications

1. Appareil de travail du sol (1) se déplaçant automatiquement avec un dispositif d'entraînement (2) pour le déplacement de l'appareil de travail du sol (1) à l'intérieur d'un environnement, une interface de communication (3) pour l'émission d'informations (4) à un utilisateur de l'appareil de travail du sol (1), un dispositif de détection d'obstacles (5) pour la détection d'obstacles (6, 7) à l'intérieur de l'environnement et un dispositif de calcul (8), qui est conçu, d'établir une carte des environs (9) sur la base des obstacles (6) détectés par le dispositif de détection d'obstacles (5), de localiser l'outil de travail du sol (1) à l'aide de la carte des environs (9) et de transmettre des instructions de commande au dispositif d'entraînement (2) et à l'interface de communication (3), le dispositif de calcul (8) étant en outre conçu pour définir au moins un obstacle (6) non franchissable automatiquement par l'outil de travail du sol (1) à l'intérieur de la carte d'environnement (9) comme un obstacle de transition (7), identifier l'obstacle de transition (7) lors d'un déplacement dans l'environnement à l'aide d'une comparaison d'obstacles (6) actuellement détectés avec l'obstacle de transition (7) enregistré dans la carte d'environnement et, lorsque l'obstacle de transition (7) est atteint, signaler à l'utilisateur une demande de transport manuel au moyen de l'interface de communication, **caractérisé en ce que** la carte d'environnement (9) présente plusieurs zones partielles d'environnement (10, 11) qui appartiennent à différents étages ou niveaux de hauteur d'un bâtiment, les zones partielles d'environnement (10, 11) étant reliées logiquement entre elles par des points de transition définis (12), la liaison étant telle que le dispositif de calcul (8) identifie le point de transition (12) d'une première zone partielle d'environnement (10) comme lieu voisin du point de transition (12) correspondant d'une deuxième zone partielle d'environnement (11) et le met en relation avec l'autre, afin de représenter l'appareil de travail du sol (1) dans une carte d'environnement composée des deux zones partielles d'environnement (10, 11), et dans lequel la demande de transport émise comprend une invitation à l'utilisateur à porter l'outil de travail du sol (1) à un lieu de transition défini (13) de l'environnement, qui est un lieu défini de l'étage respectif ou du niveau de hauteur respectif.

2. Outil de travail du sol (1) selon la revendication 1, **caractérisé en ce qu'**un point de transition (12) fait partie d'un obstacle de transition défini (7).

3. Outil de travail du sol (1) selon la revendication 1 ou 2, **caractérisé en ce que** l'obstacle de transition (7) est une marche où un escalier.

4. Appareil de travail du sol (1) selon l'une des revendications précédentes, **caractérisé en ce que** l'interface de communication (3) est conçue pour émettre le message du transporteur sous forme de signal vocal, de signal lumineux ou de message à un terminal externe (14) de l'utilisateur en liaison de communication avec l'interface de communication (3) de l'appareil de travail du sol.

5. Appareil de travail du sol (1) selon l'une des revendications précédentes, **caractérisé en ce qu'**au moins une position d'attente (15) est définie dans la carte des environs (9), position à laquelle l'appareil de travail du sol (1) attend l'utilisateur après avoir déterminé le besoin de transport et l'avoir signalé à l'utilisateur.

6. Appareil de travail du sol (1) selon la revendication 5, **caractérisé en ce que** le dispositif de calcul (8) est conçu pour mettre fin à une attente de l'appareil de travail du sol (1) à la position d'attente (15) lorsqu'il s'est écoulé, depuis le début de l'attente, une durée qui dépasse un intervalle de temps maximal défini.

7. Outil de travail du sol (1) selon l'une des revendications précédentes, **caractérisé en ce que** le dispositif de détection d'obstacles (5) est conçu pour détecter une présence de l'utilisateur dans l'environnement de l'outil de travail du sol (1) et pour la signaler au dispositif de calcul (8), le dispositif de calcul (8) étant conçu pour signaler ensuite la demande de transport manuel à l'utilisateur.

8. Appareil de travail du sol (1) selon l'une des revendications précédentes, **caractérisé en ce que** le dispositif de calcul (8) est conçu pour planifier à l'avance un déplacement de l'appareil de travail du sol (1), en particulier en établissant un plan d'utilisation (16) qui présente des consignes (17) temporelles et/ou locales pour l'exécution d'activités de travail du sol par l'appareil de travail du sol (1).

9. Appareil de travail du sol (1) selon l'une des revendications 4 à 8, **caractérisé en ce que** le dispositif de calcul (8) est conçu pour transmettre au dispositif d'entraînement (2), après localisation de l'appareil de travail du sol (1) à l'endroit de transition défini (13), un ordre de commande qui a pour effet que l'appareil de travail du sol (1) commence immédiatement ou à un moment défini une activité de travail du sol ou se déplace vers une station de base (18) marquée sur la carte des environs (9).
